# EUROPEAN PATENT SPECIFICATION

(11) **EP 3 062 623 B1**
(45) Date of publication and mention of the grant of the patent: **07.04.2021**
(21) Application number: 14853455.5
(22) Date of filing: 16.10.2014
(51) Int. Cl.: A23B 7/00, A23B 7/10, A23L 19/20, A23B 7/155, A23B 7/157, A23B 7/154

(54) **QUICK PICKLE FERMENTATION CURE**
PÖKELFERMENTATION MIT SCHNELLER HÄRTUNG
CONDIMENT MARINÉ À FERMENTATION RAPIDE

(30) Priority: 18.10.2013 US 201314057086; 10.06.2014 US 201414300981
(43) Date of publication of application: 07.09.2016
(73) Proprietor: Fermenting Solutions International, LLC, Emerald Isle, NC 28594 (US)
(72) Inventor: SCOTT, William A., Emerald Isle, NC 28594 (US)
(74) Representative: Barker Brettell LLP
(86) International application number: PCT/US2014/060820
(87) International publication number: WO 2015/057918

(56) References cited:
- CN-A- 101 961 048
- US-A- 2 979 094
- US-A- 6 110 513
- US-A1- 2003 183 092
- US-A1- 2013 052 318
- ROGER F. MCFEETERS ET AL: "Fermentation of Cucumbers Brined with Calcium Chloride Instead of Sodium Chloride", JOURNAL OF FOOD SCIENCE, vol. 75, no. 3, 1 April 2010 (2010-04-01), pages C291-C296, XP055370342, US ISSN: 0022-1147, DOI: 10.1111/j.1750-3841.2010.01558.x
- Anonymous: "Castraveti murati rapid, de vara", , 1 July 2010 (2010-07-01), XP055370358, Retrieved from the Internet: URL:http://www.costachel.ro/castraveti-mur ati-rapid-de-vara/ [retrieved on 2017-05-08]
- MELAZZINI, FRANCO ET AL.: 'Effect of Aeration in Calcium Chloride Cucumbers Fermentation.' NORTH CAROLINA STATE UNIVERSITY 2011, XP055041936 Retrieved from the Internet: <URL:http://repository.lib.ncsu.edu/ir/bits tream/1640.16/7302/1/etd.pdf>
- GUILLOU, A. A. ET AL.: 'Calcium chloride and potassium sorbate reduce sodium chloride used during natural cucumber fermentation and storage.' JOUMAL OF FOOD SCIENCE vol. 57, no. 6, 1992, pages 1364 - 1368, XP055335062
- A S Levine ET AL: "INHIBITING EFFECT OF ACETIC ACID UPON MICRO- ORGANISMS IN THE PRESENCE OF SODIUM CHLORIDE AND SUCROSE1 2", J. Bact., 39, 17, 29 December 1939 (1939-12-29), pages 255-269, XP055547223, New Haven, USA Retrieved from the Internet: URL:https://jb.asm.org/content/jb/40/2/255 .full.pdf [retrieved on 2019-01-24]
- DATABASE GNPD [Online] MINTEL; 30 July 2013 (2013-07-30), anonymous: "Hamburger Sliced Pickles", XP055691602, retrieved from www.gnpd.com Database accession no. 2132861

## Description

### Field of the Invention

The present claimed invention relates to an accelerated method of pickling fresh produce. In particular, the present invention is directed to a method of producing a fermentation cured pickle product quickly without the traditional fermentation length.

### Description of Related Art

The fermented pickle product, such as cucumbers and the like, is popular the world over because of the flavor and appearance that distinguishes them from other types of pickle products.

Commercially produced pickles are fermented in a brine solution of about 6% sodium chloride in large open top tanks as large as 40,000 liters. The salt in this type of fermentation serves more than one function. It is used to prevent freezing of outside tanks in northern climates, however, the most important function is it selects for salt tolerant bacteria, such as *Lactobacillus plantarm.* Salt tolerant bacteria are normally used for fermentations of this type. It helps maintain the firm texture of the fermented product while they are stored up to a year in fermentation tanks and it provides salty flavor in the products made from the fermented fruit such as a cucumber. Open tanks have the problem of allowing undesirable microbes and other items to enter the fermentation easily.

Traditional fermentation can take from about three to four weeks to finish the fermentation process sufficiently for commercial sale. This limits the amount of pickles produced with equipment to several batches per year in optimal conditions. Tank yard operations in the traditional fermented process involve a large amount of labor and capital with respect to maintaining the tank yard for the extended process times. An additional continuing issue for commercial pickle production is the disposal of the salt in a manner that meets current standards for disposal with some local governments severely restricting the amount of salt which can be disposed of. Recycling of the brine from each fermentation batch has shown some benefit in sodium chloride reduction. However, the intermingling of brines from different sources, batches, etc. during recycling with more diverse microbial content presents a carryover of "off" or unwanted flavors in the finished product.

Calcium chloride is well known in the pickling process for having an effect when added to the conventional pickling process, in that it increases the firmness of the preserved fruit - especially with cucumbers. Calcium chloride is considered more environmentally friendly than sodium chloride and the disposal of calcium chloride is less of an issue in terms of it being a waste product. Whole cucumber pickles have been utilized in a process involving only calcium chloride and the results indicated that a similar result in terms of time of brining and food product result that can be obtained without use of sodium chloride. Since no time difference was observed, the processes used did nothing to deal with the length of time it takes to ferment pickles and the problems with low equipment use turnover.

Roger F. McFeeters et al., "Fermentation of Cucumbers Brined with Calcium Chloride Instead of Sodium Chloride", Journal of Food Science, vol. 75, no. 3, pages C291-C296 describes an investigation relating to fermenting cucumbers in brine containing CaCl₂ as the only salt to determine the course of fermentation metabolism in the absence of NaCl.

"Castraveti murati rapid, de varǎ", URL: http://www.costachel.ro/castraveti-murati-rapid-de-vara/, dated 1 July 2010, describes a recipe for pickling cucumbers.

US2979094 describes a machine for puncturing or pricking pickles, cucumbers, or other food products.

CN101961048 describes a sauerkraut starter and a production method thereof and a method for processing sauerkraut. The compound sauerkraut starter is prepared from bacterial powder, natamycin and calcium chloride.

"Effect of Aeration in Calcium Chloride Cucumbers Fermentation", PhD thesis, Franco Melazzini and Wendy Veronica, North Carolina State University, 2011 describes investigations into the effect of aeration in calcium chloride cucumber fermentation.

### BRIEF SUMMARY OF THE INVENTION

The present invention relates to the discovery of a process of fermenting pickles with calcium chloride, such that the pickling time is greatly reduced and the turnover rate of fermentation tanks is much higher. By cutting, slicing or piercing the produce prior to the pickling process, such greatly reduced fermentation times are achieved.

Accordingly the present claimed invention relates to an accelerated method of pickling fresh produce, as defined in claim 1. The method comprises the steps of:
a) exposing at least a portion of the internal flesh of the fresh produce, wherein the internal flesh of the fresh produce is exposed by at least one of cutting, slicing, dicing and piercing the fresh produce;
b) adding the cut, sliced, diced or pierced fresh produce to a fermentation container containing a fermentation brine solution consisting essentially of (i) water; (ii) a pickling fermentation culture, (iii) calcium chloride in an amount of 0.5% to 2.0% on w/w basis of the water; and (iv) a yeast and mold inhibitor; and optionally (v) herbs and spices, such that the brine fermentation solution includes calcium chloride as the only brining ingredient;
c) fermenting the cut, sliced, diced or pierced fresh produce in the fermentation brine solution, maintaining the solution at a temperature of 25 degrees C to 35 degrees C, for a period of time sufficient to pickle the fresh produce, wherein the pickling is complete within 5 days,
wherein the yeast and mold inhibitor acts to inhibit yeast and mold during the pickling method, and
wherein the method comprises the additional step of water washing the fresh produce once the flesh is exposed, and prior to the fermentation step b), for a time sufficient to allow for a reduction in the sugars present in the fresh produce.

### BRIEF DESCRIPTION OF THE DRAWINGS

Fig. 1 is an example of the mechanical arrangement of the method of the present invention.
Fig. 2 is an example of cucumbers that have been sliced, cut (diced) and pierced.

### DETAILED DESCRIPTION OF THE INVENTION

While this invention is susceptible to embodiment in many different forms, there is shown in the drawings and will herein be described in detail specific embodiments, with the understanding that the present disclosure of such embodiments is to be considered as an example of the principles and not intended to limit the invention to the specific embodiments shown and described. The scope of the invention is defined by the claims. In the description below, like reference numerals are used to describe the same, similar or corresponding parts in the several views of the drawings. This detailed description defines the meaning of the terms used herein and specifically describes embodiments in order for those skilled in the art to practice the invention.

### DEFINITIONS

The terms "about" and "essentially" mean ±10 percent.

The terms "a" or "an", as used herein, are defined as one or as more than one. The terms "including" and/or "having", as used herein, are defined as comprising (i.e., open language).

The term "comprising" is not intended to limit inventions to only claiming the present invention with such comprising language. Any invention using the term comprising could be separated into one or more claims using "consisting" or "consisting of' claim language and is so intended.

Reference throughout this document to "one embodiment", "certain embodiments", and "an embodiment" or similar terms means that a particular feature, structure, or characteristic described in connection with the embodiment is included in at least one embodiment of the present invention. Thus, the appearances of such phrases in various places throughout this specification are not necessarily all referring to the same embodiment. Furthermore, the particular features, structures, or characteristics may be combined in any suitable manner in one or more embodiments without limitation.

The term "or" as used herein is to be interpreted as an inclusive or meaning any one or any combination. Therefore, "A, B or C" means any of the following: "A; B; C; A and B; A and C; B and C; A, B and C". An exception to this definition will occur only when a combination of elements, functions, steps or acts are in some way inherently mutually exclusive.

The drawings featured in the figures are for the purpose of illustrating certain convenient embodiments of the present invention, and are not to be considered as limitation thereto. The term "means" following a present participle of an operation indicates a desired function for which there is one or more embodiments, *i.e*., one or more methods, devices, or apparatuses for achieving the desired function and that one skilled in the art could select from these or their equivalent in view of the disclosure herein and use of the term "means" is not intended to be limiting.

Normally the fermentation of a vegetable in a brine solution takes on the order of several weeks to several months to complete the fermentation on a commercial scale. The present claimed invention provides an accelerated method of pickling fresh produce. As used herein the term "accelerated" refers to completion of the pickling process within 5 days. In one embodiment completion is within 1, 2, 3, 4, or 5 days. In one example, cubed cucumber using sodium chloride fermentation i.e. not according to the invention, would take 8-14 days to complete fermentation (i.e. all sugars fermented). In contrast, by using the method of the present invention, the same cubed cucumbers would be completely fermented in 48 hours - reducing the fermentation time to 1/5 of the original time.

As used herein the term "pickling" in the claims refers to the brine fermentation curing of vegetables in a solution of calcium chloride of a concentration of about 0.5% to about 2.0% on a w/w basis of the water in the brine. The fermentation brine solution includes a suitable pickling fermentation culture, such as *Lactobacillus plantarum* or the like bacteria, to carry out the fermentation. The brine fermentation solution includes calcium chloride, in an amount of about 0.5% to about 2.0% on w/w basis of the water, and no other brining ingredients. The brine fermentation solution can optionally also contain herbs and spices. The fermentation brine solution also includes a yeast and mold inhibitor. For example, potassium sorbate inhibits both yeast and molds and could be utilized. In one embodiment it is added in a concentration of about 0.1%.

As used herein the phrase "exposing at least a portion of the internal flesh of the fresh produce" refers to the act of cutting, slicing, dicing or piercing the fresh produce. This causes a physical exposure of the internal flesh of the vegetable and means that the fermentation brine solution can come into contact with the exposed flesh. One can expose as little or as much flesh as desired but larger amounts of exposed flesh, as by slicing, for example, give the greatest exposure of the flesh to the fermentation brine solution.

Once the flesh is exposed, the vegetable is water washed for a time sufficient to allow for a reduction in the sugars present in the fresh produce. This step allows for a further reduction in fermentation time than without this step. The time, in general, for the wash is roughly 3 minutes. One skilled in the art can determine the optimum soak time depending on the particular vegetable and the amount of interior flesh that is exposed, the size of the vegetable, and the like in view of this disclosure. Once the soaking step is completed, the wash water can be removed by means known in the art. In one embodiment it is done by use of a hydrosieve. Optionally the wash water is utilized in the fermentation step.

The produce is then added to a fermentation tank then covered with water and enough calcium chloride added to make a solution of about 0.5% to about 2% w/w, as described above. In one embodiment, the solution is made isotonic. Since this method is designed primarily for commercial size production, the fermentation vessel in one embodiment is at least 19,000 liters (though any size big enough to fit a single piece of a product or larger will work) and the tank can be filled with produce to a level of about 45% product and 55% solution though the range is from about 30/70 to 70/30 volume basis. In one embodiment, the tank has a closed top to prevent entry of random bacteria and other unwanted items. In addition, the culture and mold and yeast inhibitors are added as well. The solution is brought to a temperature ideal for the fermentation of a *Lactobacillus* fermentation, of about 25 to 35 degrees C, and held for a length of fermentation time as described above.

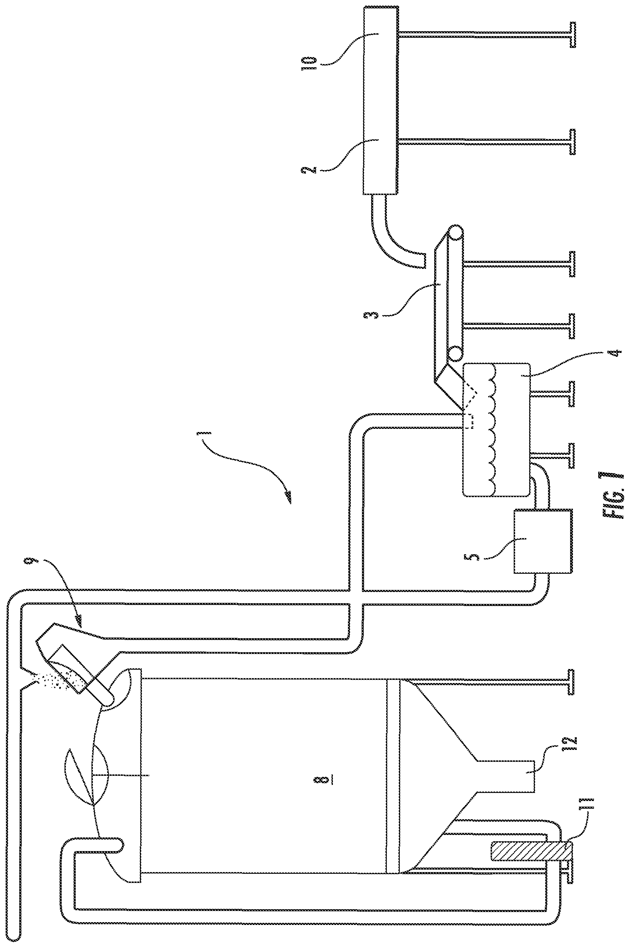

Now referring to the drawings, Fig. 1 shows a commercial production arrangement 1 using the method of the present invention. In this view, a commercial step for exposing the flesh of the produce 10 is done at cutter/dicer 2. The produce is then transferred to shaker screen 3 which removes small unwanted pieces and debris while transferring the produce to a wet tank 4 for the soaking step as described above. Next, water transfer pump 5 transfers the water and produce to the commercial fermentation tank 8 after the wash water is optionally removed via hydro sieve 9 positioned right before the produce enters the fermentation tank 8. The appropriate calcium chloride, the fermentation culture flavorings, water and the like are added to the tank. A heat exchanger 11 keeps the fermentation at the appropriate temperature, e.g. 30 degrees C, for the desired time and then water and produce are removed via fermentation tank drain 12 to the bottom of fermentation tank 8 via gravity once the pickles are fermented completely to the desired degree.

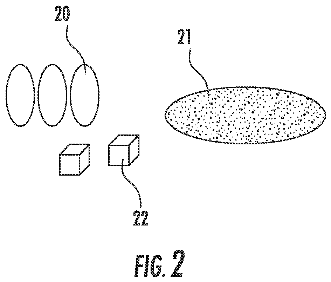

Fig. 2 shows cucumbers that have been sliced 20, pierced 21 and diced 22 for addition to the fermentation process of the present invention.

Those skilled in the art to which the present invention pertains may make modifications resulting in other embodiments employing principles of the present invention, particularly upon considering the foregoing teachings. Accordingly, the described embodiments are to be considered in all respects only as illustrative, and not restrictive, and the scope of the present invention is, therefore, indicated by the appended claims rather than by the foregoing description or drawings. Consequently, while the present invention has been described with reference to particular embodiments, modifications of structure, sequence, materials and the like apparent to those skilled in the art still fall within the scope of the invention as claimed by the applicant. The scope of the invention is defined by the following claims.

## Claims

1. An accelerated method of pickling fresh produce, the method comprising the steps of:
a) exposing at least a portion of the internal flesh of the fresh produce, wherein the internal flesh of the fresh produce is exposed by at least one of cutting, slicing, dicing and piercing the fresh produce;
b) adding the cut, sliced, diced or pierced fresh produce to a fermentation container containing a fermentation brine solution consisting essentially of (i) water; (ii) a pickling fermentation culture, (iii) calcium chloride in an amount of 0.5% to 2.0% on w/w basis of the water; and (iv) a yeast and mold inhibitor; and optionally (v) herbs and spices, such that the brine fermentation solution includes calcium chloride as the only brining ingredient;
c) fermenting the cut, sliced, diced or pierced fresh produce in the fermentation brine solution, maintaining the solution at a temperature of 25 degrees C to 35 degrees C, for a period of time sufficient to pickle the fresh produce, wherein the pickling is complete within 5 days,
wherein the yeast and mold inhibitor acts to inhibit yeast and mold during the pickling method, and
wherein the method comprises the additional step of water washing the fresh produce once the flesh is exposed, and prior to the fermentation step b), for a time sufficient to allow for a reduction in the sugars present in the fresh produce.

2. The picking method according to claim 1 wherein the yeast and mold inhibitor is potassium sorbate.

3. The pickling method according to claim 1 wherein the calcium chloride is present at 1% w/w of the water solution.

4. The pickling method according to claim 1 wherei the wash water is removed by a hydrosieve.

5. The pickling method according to claim 1 wherein the container has a closed top.

6. The pickling method according to claim 1 wherein the pickling culture is *Lactobacillus plantarum.*

7. The pickling method according to claim 1 wherein pickling is complete within 1 to 5 days.

8. The pickling method according to claim 1 wherein the fresh produce is vegetables.

9. The pickling method according to claim 1 wherein the fresh produce is cucumbers.

10. The pickling method according to claim 1 wherein the fermentation container is at least 19,000 litres in size.

11. The pickling method according to claim 1 wherein the fermentation container is filled with produce to a level such that the amount of produce to solution is from 30:70 to 70:30 on a volume basis.

12. The pickling method according to claim 1 wherein in step b) the cut, sliced, diced or pierced produce is added to the fermentation container and then covered with water and enough calcium chloride is added to make a solution of 0.5% to 2% w/w.

## Patentansprüche

1. Beschleunigtes Verfahren zum Einlegen frischer Naturprodukte, wobei das Verfahren die Schritte umfasst:
a) Freilegen wenigstens eines Teils des inneren Fruchtfleischs des frischen Naturprodukts, wobei das innere Fruchtfleisch des frischen Naturprodukts durch wenigstens eines von Schneiden, Aufschneiden, Würfeln und Durchstechen des frischen Naturprodukts freigelegt wird;
b) Zugeben des geschnittenen, aufgeschnittenen, gewürfelten oder durchstochenen frischen Naturprodukts zu einem Fermentationsbehälter, der eine Fermentations-Salzlakenlösung enthält, die im Wesentlichen aus (i) Wasser; (ii) einer Einlege-Fermentationskultur; (iii) Calciumchlorid in einer Menge von 0,5 % bis 2,0 % Gew./Gew., bezogen auf das Wasser; und (iv) einem Hefe- und Schimmelhemmer; und gegebenenfalls (v) Kräutern und Gewürzen besteht, so dass die Salzlaken-Fermentationslösung Calciumchlorid als den einzigen salzenden Inhaltsstoff enthält;
c) Fermentieren des geschnittenen, aufgeschnittenen, gewürfelten oder durchstochenen frischen Naturprodukts in der Fermentations-Salzlakenlösung, Halten der Lösung bei einer Temperatur von 25 Grad C bis 35 Grad C für eine Zeitdauer, die ausreicht, um das frischen Naturprodukt einzulegen, wobei das Einlegen innerhalb von 5 Tagen abgeschlossen ist,
wobei der Hefe- und Schimmelhemmer zum Hemmen von Hefe und Schimmel während des Einlegeverfahrens wirkt und
wobei das Verfahren den zusätzlichen Schritt des Waschens des frischen Naturprodukts mit Wasser nach dem Freilegen des Fruchtfleischs aber vor dem Fermentationsschritt b) für eine Zeit, die ausreicht, um eine Verringerung der in dem frischen Naturprodukt vorhandenen Zucker zu ermöglichen, umfasst.

2. Einlegeverfahren gemäß Anspruch 1, wobei der Hefe- und Schimmelhemmer Kaliumsorbat ist.

3. Einlegeverfahren gemäß Anspruch 1, wobei das Calciumchlorid mit 1 % Gew./Gew. der Wasserlösung vorhanden ist.

4. Einlegeverfahren gemäß Anspruch 1, wobei das Waschwasser durch ein Hydrosieb entfernt wird.

5. Einlegeverfahren gemäß Anspruch 1, wobei der Behälter oben geschlossen ist.

6. Einlegeverfahren gemäß Anspruch 1, wobei die Einlegekultur *Lactobacillus plantarum* ist.

7. Einlegeverfahren gemäß Anspruch 1, wobei das Einlegen innerhalb von 1 bis 5 Tagen abgeschlossen ist.

8. Einlegeverfahren gemäß Anspruch 1, wobei das frische Naturprodukt Gemüse ist.

9. Einlegeverfahren gemäß Anspruch 1, wobei das frische Naturprodukt Gurken sind.

10. Einlegeverfahren gemäß Anspruch 1, wobei der Fermentationsbehälter wenigstens 19.000 Liter groß ist.

11. Einlegeverfahren gemäß Anspruch 1, wobei der Fermentationsbehälter mit Naturprodukt auf ein Niveau gefüllt wird, bei dem die Menge an Naturprodukt zu der Lösung von 30:70 bis 70:30 auf Volumenbasis beträgt.

12. Einlegeverfahren gemäß Anspruch 1, wobei bei Schritt b) das geschnittene, aufgeschnittene, gewürfelte oder durchstochene Naturprodukt zu dem Fermentationsbehälter zugegeben und dann mit Wasser bedeckt wird und ausreichend Calciumchlorid zugegeben wird, um eine Lösung von 0,5 % bis 2 % Gew./Gew. zu erhalten.

## Revendications

1. Procédé accéléré de marinage d'un produit frais, le procédé comprenant les étapes de :
a) exposition d'au moins une partie de la chair interne du produit frais, la chair interne du produit frais étant exposée à au moins l'une des opérations de découpage, d'éminçage, de coupe en dés et de perçage du produit frais ;
b) introduction du produit frais découpé, émincé, coupé en dés ou percé dans une cuve de fermentation contenant une solution de saumure de fermentation consistant essentiellement en (i) eau ; (ii) une culture de fermentation-marinage, (iii) chlorure de calcium en une quantité de 0,5 % à 2,0 % en poids par rapport au poids d'eau ; et (iv) un inhibiteur de levure et de moisissure ; et éventuellement (v) herbes aromatiques et épices, de telle sorte que la solution de fermentation par saumurage comprenne du chlorure de calcium en tant qu'ingrédient de saumurage unique ;
c) fermentation du produit frais découpé, émincé, coupé en dés ou percé dans la solution de saumure de fermentation, maintien de la solution à une température de 25 degrés C à 35 degrés C pendant un laps de temps suffisant pour mariner le produit frais, le marinage étant achevé dans les 5 jours,
dans lequel l'inhibiteur de levure et de moisissure agit en inhibant la levure et la moisissure au cours du procédé de marinage, et
le procédé comprenant l'étape additionnelle de lavage à l'eau du produit frais une fois que la chair est exposée, et avant l'étape de fermentation b), pendant un temps suffisant pour permettre une réduction des sucres présents dans le produit frais.

2. Procédé de marinage selon la revendication 1, dans lequel l'inhibiteur de levure et de moisissure est le sorbate de potassium.

3. Procédé de marinage selon la revendication 1, dans lequel le chlorure de calcium est présent en une quantité de 1 % en poids par rapport au poids de la solution aqueuse.

4. Procédé de marinage selon la revendication 1, dans lequel l'eau de lavage est éliminée par un tamis hydraulique.

5. Procédé de marinage selon la revendication 1, dans lequel la cuve comporte un couvercle fermé.

6. Procédé de marinage selon la revendication 1, dans lequel la culture de marinage est *Lactobacillus plantarum.*

7. Procédé de marinage selon la revendication 1, dans lequel le marinage est terminé dans les 1 à 5 jours.

8. Procédé de marinage selon la revendication 1, dans lequel le produit frais est constitué de légumes.

9. Procédé de marinage selon la revendication 1, dans lequel le produit frais est constitué de concombres.

10. Procédé de marinage selon la revendication 1, dans lequel la cuve de fermentation a une taille d'au moins 19 000 litres.

11. Procédé de marinage selon la revendication 1, dans lequel la cuve de fermentation est remplie du produit à un niveau tel que la quantité du produit, rapportée à celle de la solution, soit de 30:70 à 70:30 en volume.

12. Procédé de marinage selon la revendication 1, dans lequel, dans l'étape b), le produit découpé, émincé, coupé en dés ou percé est introduit dans la cuve de fermentation puis recouvert d'eau, et une quantité de chlorure de sodium suffisante pour fabriquer une solution à 0,5 % à 2 % en poids est ajoutée.
